# EUROPÄISCHE PATENTSCHRIFT

(11) **EP 4 008 914 B1**
(45) Veröffentlichungstag und Bekanntmachung des Hinweises auf die Patenterteilung: **20.11.2024**
(21) Anmeldenummer: 22150193.5
(22) Anmeldetag: 27.04.2020
(51) Int. Cl.: F16B 2/18, B62J 11/00, B62J 11/04, F16B 21/07, F16B 1/00

(54) **VERSCHLUSSVORRICHTUNG ZUM VERBINDEN VON ZWEI BAUGRUPPEN MITEINANDER**
CLOSURE DEVICE FOR CONNECTING TWO ASSEMBLIES TOGETHER
DISPOSITIF DE FERMETURE PERMETTANT DE RELIER DEUX MODULES L'UN À L'AUTRE

(30) Priorität: 26.04.2019 DE 102019206054
(43) Veröffentlichungstag der Anmeldung: 08.06.2022
(62) Teilanmeldung aus: 20726708.9
(73) Patentinhaber: Fidlock GmbH, 30659 Hannover (DE)
(72) Erfinder: FIEDLER, Joachim, 30519 Hannover (DE); BOTKUS, Breido, 30175 Hannover (DE); RICHTER, Friedemann, 30713 Hannover (DE); DIERSCHKE, Dennis, 30419 Hannover (DE)
(74) Vertreter: Maikowski & Ninnemann Patentanwälte Partnerschaft mbB

(56) Entgegenhaltungen:
- DE-A1- 102014 213 383
- DE-A1- 102016 216 422
- DE-B3- 102010 044 144

## Beschreibung

Die Erfindung betrifft eine Verschlussvorrichtung zum Verbinden von zwei Baugruppen miteinander nach dem Oberbegriff des Anspruchs 1, insbesondere zum Verbinden eines Gegenstands mit einem Rahmen eines Fahrzeugs, z.B. eines Fahrrads.

Eine derartige Verschlussvorrichtung umfasst ein an einer der Baugruppen anzuordnendes, erstes Verschlussteil, das ein Sperrstück mit einem ersten Sperrabschnitt und ein erstes Magnetelement aufweist. Die Verschlussvorrichtung umfasst zudem ein an der anderen der Baugruppen zu befestigendes, zweites Verschlussteil, das eine Sperraufnahme mit einem zweiten Sperrabschnitt und ein zweites Magnetelement aufweist. Das erste Verschlussteil und das zweite Verschlussteil sind entlang einer Schließrichtung aneinander ansetzbar und sind in einer Schließstellung formschlüssig entgegen der Schließrichtung miteinander verbunden. Dies erfolgt dadurch, dass das Sperrstück des ersten Verschlussteils in der Sperraufnahme des zweiten Verschlussteils aufgenommen ist und der erste Sperrabschnitt des Sperrstücks formschlüssig mit dem zweiten Sperrabschnitt der Sperraufnahme in Eingriff steht.

Die Verschlussvorrichtung ist hierbei magnetisch ausgebildet, indem Magnetelemente der Verschlussteile magnetisch anziehend zusammenwirken und auf diese Weise das Ansetzen der Verschlussteile aneinander zum Schließen der Verschlussvorrichtung unterstützen.

Eine solche Verschlussvorrichtung kann beispielsweise zum Befestigen einer Baugruppe, wie zum Beispiel einer Trinkflasche oder einer Tasche, eines Fahrradschlosses oder eines anderen Gegenstands an dem Rahmen eines Fahrrads dienen.

Bei einem aus der WO 2012/151320 A9 bekannten Verschluss wird ein Klemmbügel an einem Rahmen befestigt und weist Magnetelemente auf, die zum Befestigen einer Trinkflasche an dem Rahmen mit einem magnetisch aktiven Ring der Trinkflasche zusammenwirken.

Zudem ist bekannt, Behälter in Form von Trinkflaschen rastend an einem Rahmen eines Fahrzeugs zu befestigen, wobei in diesem Zusammenhang auch in Erwägung gezogen worden ist, magnetische Elemente zum Sichern der Verbindung einzusetzen.

Generell soll eine Verschlussvorrichtung, mit der ein Gegenstand (beispielsweise eine Trinkflasche oder ein Fahrradschloss) an dem Rahmen eines Fahrzeugs (insbesondere eines Zweirads oder eines Dreirads) festgelegt werden kann, einfach zu bedienen sein. Der Gegenstand soll platzsparend an dem Fahrzeug untergebracht werden können, wobei beispielsweise in einer Rahmenöffnung eines Fahrradrahmens nur ein beschränkter Platz zur Verfügung steht. Die Verschlussvorrichtung soll in geöffneter Stellung einen geringen Bauraum sowohl an dem Fahrzeug als auch an dem Gegenstand aufweisen, damit die Verschlussteile der Verschlussvorrichtung nicht stören. Wünschenswert ist zudem, die Verschlussvorrichtung kostengünstig auszugestalten, wobei insbesondere auch in Betracht zu ziehen ist, dass z.B. Behälter in Form von Trinkflaschen nach begrenzter Benutzungsdauer ausgetauscht werden müssen.

Wünschenswert ist zudem, ein System einer Verschlussvorrichtung zu schaffen, bei dem ein erstes Verschlussteil flexibel zum Anbringen ganz unterschiedlicher Gegenstände zum Beispiel an einem Fahrrad verwendet werden kann. Ein einheitliches erstes Verschlussteil soll hierbei zum Beispiel dauerhaft an einem Fahrzeug befestigt sein und ein Anbringen von unterschiedlichen, mit einem zweiten Verschlussteil bestückten Gegenständen, zum Beispiel eines Behälters oder eines Fahrradschlosses, ermöglichen.

Die DE 10 2010 044 144 B3 beschreibt eine Verschlussvorrichtung mit zwei Verschlussteilen, von denen eines ein Sperrstück und das andere ein Federverriegelungselement zum formschlüssigen Verbinden mit dem Sperrstück aufweist.

Aufgabe der vorliegenden Erfindung ist es, eine Verschlussvorrichtung bereitzustellen, die einfach handhabbar ist, ein zuverlässiges Befestigen zweier Baugruppen aneinander ermöglicht und zudem vielfältig und flexibel einsetzbar ist.

Diese Aufgabe wird durch eine Verschlussvorrichtung mit den Merkmalen des Anspruchs 1 gelöst.

Demnach wird eine Verschlussvorrichtung zum Verbinden von zwei Baugruppen miteinander beansprucht, mit einem an einer der Baugruppen anzuordnen, ersten Verschlussteil, das zumindest zwei Sperrstücke mit jeweils einem Sperrabschnitt und zumindest ein erstes Magnetelement aufweist, und einem an der anderen der Baugruppen zu befestigenden, zweiten Verschlussteil, das zumindest zwei Sperraufnahmen und zumindest ein zweites Magnetelement aufweist. Das erste Verschlussteil und das zweite Verschlussteil sind entlang einer Schließrichtung aneinander ansetzbar und in einer Schließstellung miteinander verbunden, indem die Sperrstücke des ersten Verschlussteils in den Sperraufnahmen des zweiten Verschlussteils aufgenommen sind. Das erste Magnetelement und das zweite Magnetelement sind dazu ausgebildet, das Ansetzen des ersten Verschlussteils und des zweiten Verschlussteils aneinander magnetisch zu unterstützen. Zusätzlich weist die Verschlussvorrichtung einen an dem zweiten Verschlussteil angeordneten Verriegelungsmechanismus auf, der zumindest zwei Verriegelungselemente und einen mit den Verriegelungselementen wirkverbundenen Betätigungsmechanismus aufweist, wobei die Verriegelungselemente in der Schließstellung mit den Sperrabschnitten der Sperrstücke in Wirkverbindung bringbar sind, um eine formschlüssige oder reibschlüssige Verbindung zwischen dem ersten Verschlussteil und dem zweiten Verschlussteil herzustellen, wobei der Betätigungsmechanismus betätigbar ist, um die Verriegelungselemente relativ zu den Sperraufnahmen zu verstellen, sodass das erste Verschlussteil und das zweite Verschlussteil voneinander lösbar sind.

Bei der Verschlussvorrichtung weist das erste Verschlussteil zwei (oder mehr) Sperrstücke zum Beispiel in Form von an einem Körper geformten, starren Zapfen auf, die jeweils einen Sperrabschnitt tragen. Die Sperrstücke können mit Sperraufnahmen des zweiten Verschlussteils in Eingriff gebracht werden, um eine formschlüssige oder reibschlüssige Verbindung zwischen den Verschlussteilen herzustellen.

Bei einer solchen Verschlussvorrichtung ist ein Betätigungsmechanismus vorgesehen, der die zumindest zwei Verriegelungselemente in der Schließstellung zum Beispiel mit den Sperrabschnitten der Sperrstücke in Eingriff bringt, um die Verschlussteile formschlüssig miteinander zu verbinden. Bei der Verschlussvorrichtung sind an den Sperrstücken des ersten Verschlussteils Sperrabschnitte zum Beispiel nach Art von Hinterschnitten geformt. Auf solche Sperrabschnitte kann an den Sperraufnahmen des zweiten Verschlussteils aber verzichtet werden. Eine formschlüssige Verbindung kann allein durch die Verriegelungselemente und deren Eingriff mit den Sperrabschnitten der Sperrstücke in der Schließstellung der Verschlussvorrichtung hergestellt werden, sodass die (zum Beispiel Hinterschnitte ausbildenden) Verriegelungselemente, die über einen Betätigungsmechanismus zu betätigen sind, in der Schließstellung durch ihren Eingriff mit den Sperrabschnitten der Sperrstücke eine formschlüssige Verbindung zwischen den Verschlussteilen herstellen.

Vorteilhafterweise sind hierbei die Sperraufnahmen so ausgestaltet, dass auch sie zum Formschluss beitragen, insbesondere indem sie starken federvorgespannten Kräften quer zur Schließrichtung, die die Sperrstücke verbiegend belasten, eine Gegenkraft entgegensetzen.

Alternativ kann über den Verriegelungsmechanismus eine reibschlüssige Verbindung zwischen den Verschlussteilen hergestellt werden, indem die Sperrstücke über die Verriegelungselemente quer zur Schließrichtung in Anlage mit zugeordneten Anlageflächen der Sperraufnahmen gedrückt werden und so in der Schließstellung ein Reibschluss zwischen den Sperrstücken und den Sperraufnahmen bewirkt wird.

Der Betätigungsmechanismus weist ein Hebelelement auf, das zu dem zweiten Verschlussteil verschwenkbar ist, um die Verriegelungselemente relativ zu den Sperraufnahmen zu verstellen. Der Betätigungsmechanismus verwirklicht einen Kniehebel, indem ein Verbindungshebel an einer ersten Gelenkachse gelenkig mit dem Hebelelement und an einer zweiten Gelenkachse gelenkig mit einem der Verriegelungselemente verbunden ist.

Zusätzlich kann das Hebelelement an einer dritten Gelenkachse gelenkig mit einem anderen der Verriegelungselemente verbunden sein, sodass durch Verstellen des Hebelelements die Verriegelungselemente gleichzeitig zum Beispiel linear an dem zweiten Verschlussteil verstellt werden können.

Auch bei dieser Ausführungsform kann eine Elastizität im Betätigungsmechanismus zum Beispiel über ein Federelement geschaffen sein, das Komponenten elastisch miteinander verbindet, zum Beispiel indem eine Gelenkachse elastisch abgestützt ist.

Es ist dabei auch denkbar, dass entweder die Verriegelungselemente, die Sperrabschnitte an den Verriegelungselementen, der Verbindungshebel, der Betätigungshebel oder ein alternativer, schließend und vorspannend wirkender Betätigungsmechanismus (aufweisend zum Beispiel einen Exzenter, eine Schraube oder einen Keil) eine Elastizität aufweisen und dazu beispielsweise ganz oder in Teilen aus einem federelastischen Material wie Gummi, Silikon, TPU, TPE oder ähnlichem gebildet ist.

Eine Verschlussvorrichtung der vorangehend beschriebenen Art kann z.B. an einem Fahrrad verwendet werden, wobei ein solches Fahrrad durch menschliche Pedalkraft oder auch elektrisch angetrieben sein kann. Eine Verschlussvorrichtung der hier beschriebenen Art kann grundsätzlich aber zum Verbinden zweier ganz beliebiger Baugruppen miteinander verwendet werden.

Der der Erfindung zugrunde liegende Gedanke soll nachfolgend anhand des in den Figuren dargestellten Ausführungsbeispiels näher erläutert werden. Es zeigen:
- Fig. 1: eine schematische Ansicht eines Fahrzeugs in Form eines Fahrrads;
- Fig. 2: eine Ansicht eines Ausführungsbeispiels einer Verschlussvorrichtung mit einem ersten Verschlussteil und einem zweiten Verschlussteil;
- Fig. 3: eine Seitenansicht der Verschlussvorrichtung gemäß Fig. 2;
- Fig. 4: eine andere perspektivische Ansicht der Verschlussvorrichtung gemäß Fig. 2;
- Fig. 5A,: eine Ansicht eines Ausführungsbeispiels einer Verschlussvorrichtung, in einer Schließstellung, bei mit einem zweiten Verschlussteil verbundenem Gegenstand;
- Fig. 5B: eine Draufsicht auf die Verschlussvorrichtung;
- Fig. 5C: eine Schnittansicht entlang der Linie A-A gemäß Fig. 5C;
- Fig. 6A: eine Ansicht der Verschlussvorrichtung, ohne einen mit dem zweiten Verschlussteil verbundenen Gegenstand;
- Fig. 6B: eine Draufsicht auf die Verschlussvorrichtung;
- Fig. 6C: eine Schnittansicht entlang der Linie A-A gemäß Fig. 6B;
- Fig. 7A: eine Ansicht der Verschlussvorrichtung beim Öffnen;
- Fig. 7B: eine Draufsicht auf die Verschlussvorrichtung;
- Fig. 7C: eine Schnittansicht entlang der Linie A-A gemäß Fig. 7B;
- Fig. 8A: eine Ansicht der Verschlussvorrichtung beim weiteren Öffnen;
- Fig. 8B: eine Draufsicht auf die Verschlussvorrichtung;
- Fig. 8C: eine Schnittansicht entlang der Linie A-A gemäß Fig. 8B;
- Fig. 9A: eine Ansicht der Verschlussvorrichtung beim weiteren Öffnen;
- Fig. 9B: eine Draufsicht auf die Verschlussvorrichtung;
- Fig. 9C: eine Schnittansicht entlang der Linie A-A gemäß Fig. 9B;
- Fig. 10A: eine Ansicht der Verschlussvorrichtung beim weiteren Öffnen;
- Fig. 10B: eine Draufsicht auf die Verschlussvorrichtung;
- Fig. 10C: eine Schnittansicht entlang der Linie A-A gemäß Fig. 10B;
- Fig. 11A: eine Ansicht der Verschlussvorrichtung beim Lösen der Verschlussteile voneinander;
- Fig. 11B: eine Draufsicht auf die Verschlussvorrichtung;
- Fig. 11C: eine Schnittansicht entlang der Linie A-A gemäß Fig. 11B;
- Fig. 12: eine Ansicht eines anderen Ausführungsbeispiels einer Verschlussvorrichtung, in einer Schließstellung der Verschlussteile bei mit einem der Verschlussteile verbundenem Gegenstand;
- Fig. 13: eine Ansicht der Verschlussvorrichtung, ohne den Gegenstand;
- Fig. 14: eine Ansicht der Verschlussvorrichtung beim Öffnen;
- Fig. 15: eine Ansicht der Verschlussvorrichtung beim weiteren Öffnen; und
- Fig. 16: eine Ansicht der Verschlussvorrichtung beim Lösen der Verschlussteile voneinander.

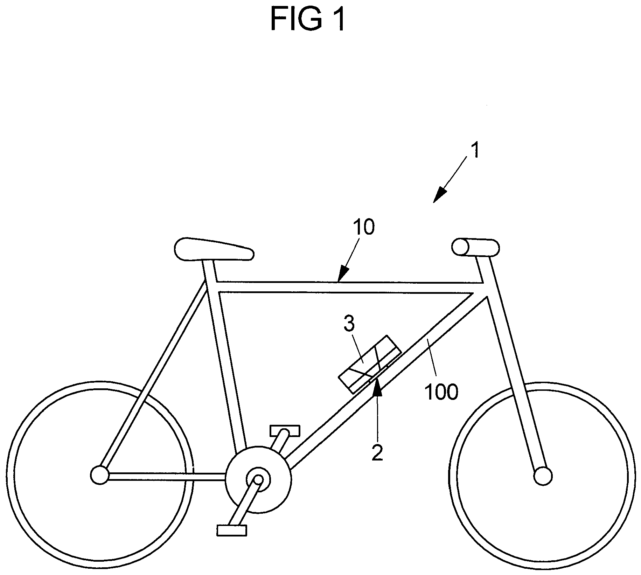

Fig. 1 zeigt in einer schematischen Ansicht ein Fahrzeug 1 in Form eines Fahrrads, das einen Rahmen 10 mit einer Rahmenstange 100 aufweist, an die über eine Verschlussvorrichtung 2 eine Baugruppe 3, beispielsweise in Form einer Trinkflasche, einer Trinkflaschenhalterung, einer Fahrradschlosshalterung oder eines anderen Behälters, z.B. einer Tasche, angesetzt ist.

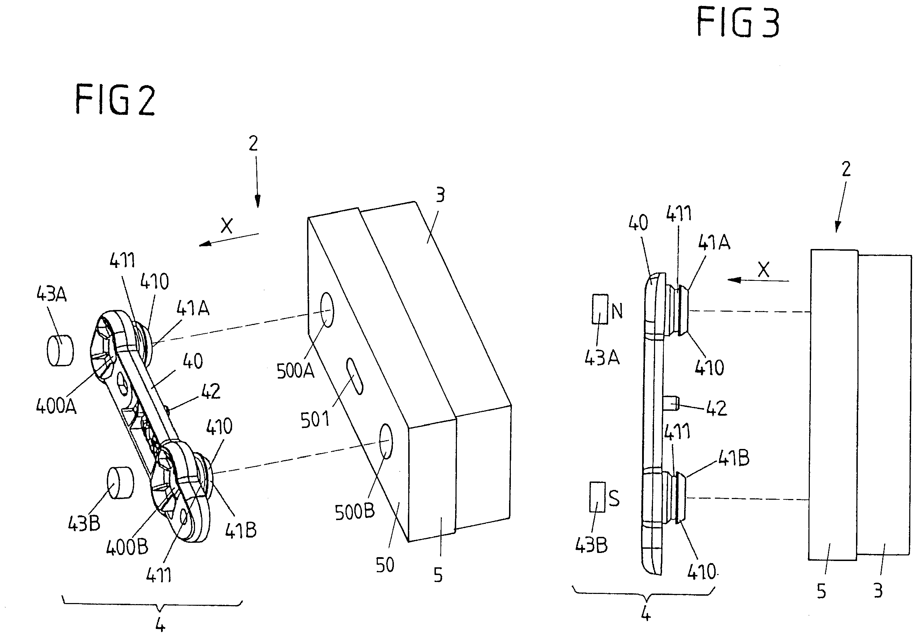

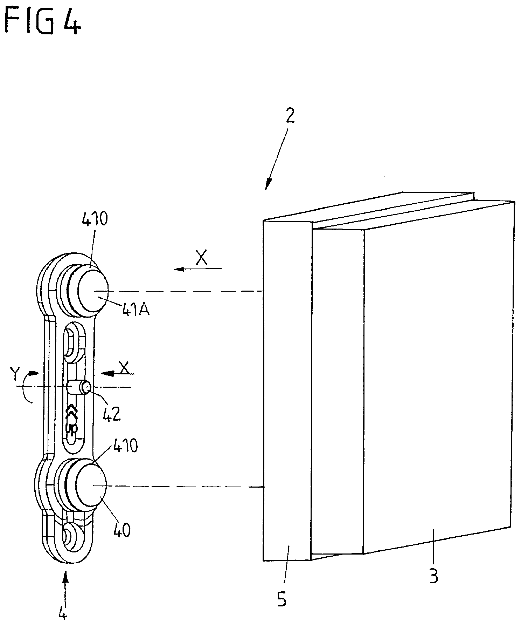

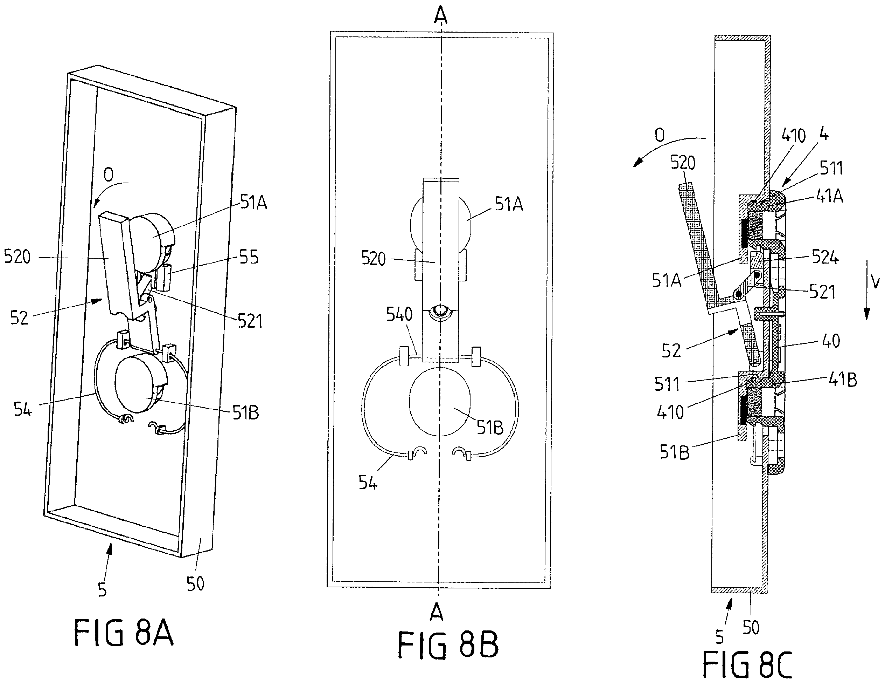

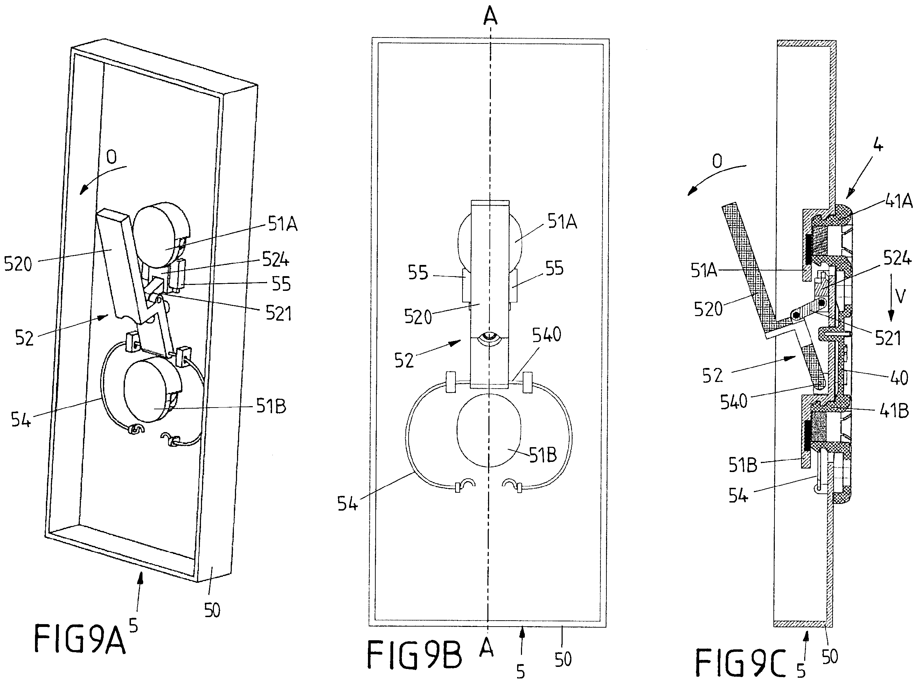

Fig. 2 bis 11A-11C zeigen ein Ausführungsbeispiel einer Verschlussvorrichtung 2, die zum Verbinden einer Baugruppe 3, zum Beispiel eines Behälters 3 oder eines Fahrradschlosses, mit dem Rahmen 10 eines Fahrzeugs 1 dient. Die Verschlussvorrichtung 2 weist ein erstes Verschlussteil 4 auf, das fest mit einer Rahmenstange 100 des Rahmens 10 des Fahrzeugs 1 zu verbinden, beispielsweise zu verschrauben ist. An das erste Verschlussteil 4 kann ein zweites Verschlussteil 5 angesetzt werden, das mit der Baugruppe 3 zu verbinden ist.

Das erste Verschlussteil 4 weist einen Körper 40 auf, von dem zwei Sperrstücke 41A, 41B vorstehen. Die Sperrstücke 41A, 41B weisen jeweils einen Schaft 411 auf, an dessen vom Körper 40 abliegendem Ende ein Sperrabschnitt 410 in Form eines Rastvorsprungs nach Art eines Hinterschnitts ausgebildet ist, der um den Schaft 411 umläuft und dabei radial von dem Schaft 411 nach außen hin vorsteht.

Die Sperrstücke 41A, 41B weisen - in diesem Ausführungsbeispiel zylindrische - axial zu den Sperrabschnitten 410 beabstandete Anlageflächen zur Anlage an zugeordneten Anlageflächen der Sperraufnahmen 51A, 51B auf.

An der von den Sperrstücken 41A, 41B abgewandten Seite weist der Körper 40 Aufnahmeöffnungen 400A, 400B am Orte der Sperrstücke 41A, 41B auf, in die Magnetelemente 43A, 43B eingesetzt und fest mit dem Körper 40 verbunden sind.

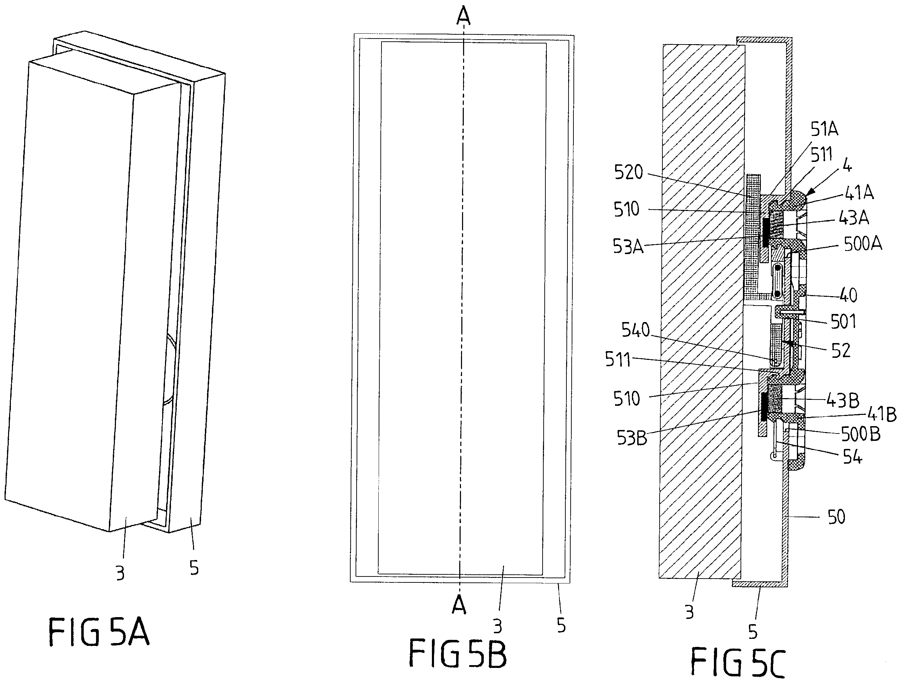

Das zweite Verschlussteil 5 weist einen Körper 50 auf, in dem zwei Verschlussöffnungen 500A, 500B gebildet sind, in die das erste Verschlussteil 4 mit den Sperrstücken 41A, 41B entlang einer Schließrichtung X einsetzbar ist, um die Verschlussrichtung 2 zu schließen und die Verschlussteile 4, 5 miteinander zu verbinden. An dem Körper 40 des ersten Verschlussteils 4 ist ein Zapfen 42 geformt, der mittig zwischen den Sperrstücken 41A, 41B angeordnet ist und bei Verbinden der Verschlussteile 4, 5 miteinander mit einer Öffnung 501 am Körper 50 des zweiten Verschlussteils 5 in Eingriff gelangt, wie dies zum Beispiel aus Fig. 2 in Zusammenschau mit Fig. 5A-5C ersichtlich ist.

Im vorliegenden Beispiel ist die Öffnung 501 langloch-förmig zur verschieblichen Aufnahme des Zapfens 42. Der Zapfen 42 ist hierbei so weit in der Öffnug 501 verschieblich, dass die Sperrabschnitte 410 der Sperrstücke 41A, 41B sich aus einer Schließstellung, in der die Sperrabschnitte 410, 511 miteinander in Eingriff sind, außer Eingriff von den Sperrabschnitten 511 der Sperraufnahmen 51A, 51B bewegbar sind.

In einer alternativen Ausführungsform kann die Öffnung 501 auch eine runde Form zur in alle Richtungen eng tolerierten Aufnahme des Zapfens 42 haben. Die Sperrabschnitte 511 sind in diesem Fall so angeordnet, dass sie mittels Rotation der Verschlussteile zueinander um den Zapfen 42 außer Eingriff bringbar sind. In diesem Fall kann über die Öffnung 501 und den Zapfen 42 eine Drehlagerung zwischen den Verschlussteilen 4, 5 geschaffen werden.

Wie aus der Schnittansicht gemäß Fig. 5C ersichtlich ist, weist das zweite Verschlussteil 5 Sperraufnahmen 51A, 51B auf, in die die Sperrstücke 41A, 41B des ersten Verschlussteils 4 zum Schließen der Verschlussvorrichtung 2 einsetzbar sind. Die Sperraufnahmen 51A, 51B sind in die Schließrichtung X durch Wandungen 510 begrenzt, an denen Magnetelemente 53A, 53B angeordnet sind, die beim Verbinden der Verschlussteile 4, 5 miteinander magnetisch anziehend mit den Magnetelementen 43A, 43B an den Sperrstücken 41A, 41B des ersten Verschlussteils 4 zusammenwirken, sodass das Ansetzen der Verschlussteile 4, 5 aneinander magnetisch unterstützt wird.

Die Magnetelemente 43A, 43B, 53A, 53B können jeweils als Permanentmagnete ausgebildet sein und weisen in diesem Fall mit ungleichnamigen Polen aufeinander zu, sodass eine magnetische Anziehungskraft zwischen den Verschlussteilen 4, 5 besteht. Alternativ ist auch denkbar, dass die Magnetelemente 43A, 43B, 53A, 53B an einem der Verschlussteile 4, 5 als Permanentmagnete und die Magnetelemente 53A, 53B, 43A, 43B an dem anderen der Verschlussteile 5, 4 als magnetische Anker aus einem ferromagnetischen Material ausgebildet sind.

Die Magnetelemente 43A, 43B, 53A, 53B der Verschlussteile bewirken eine Vorpositionierung derart, dass die Sperrabschnitte 410, 511 zum Beispiel ohne Kollision miteinander in die Schließstellung gebracht werden können. Sind die Magnetelemente 43A, 43B, 53A, 53B als Permanentmagnete ausgebildet und sind sie in der Schließstellung in Gegenüberlage zueinander ausgerichtet, bewirkt die magnetische Anziehung zudem das In-Eingriff-Bringen der Sperrabschnitte 410, 511.

Bei dem dargestellten Ausführungsbeispiel sind an den Sperraufnahmen 51A, 51B Sperrabschnitte 511 in Form von quer zur Schließrichtung X nach innen vorspringenden Hinterschnitten geformt, mit denen die Sperrabschnitte 410 der Sperrstücke 41A, 41B in der Schließstellung der Verschlussvorrichtung 2 formschlüssig in Eingriff stehen, sodass die Verschlussteile 4, 5 mechanisch miteinander verbunden sind.

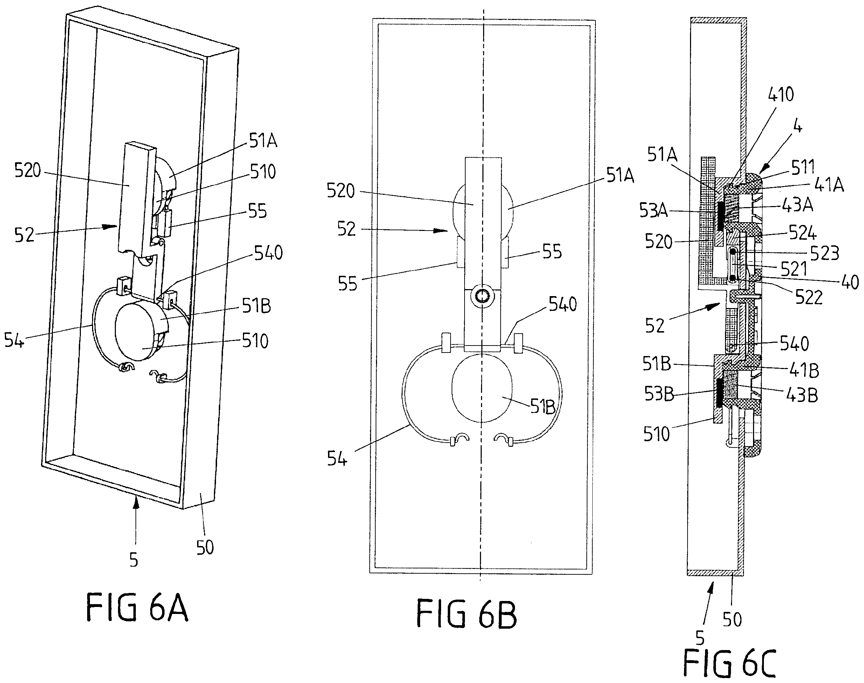

Am zweiten Verschlussteil 5 ist ein Verriegelungsmechanismus 52 angeordnet, der dazu dient, den Eingriff der Sperrstücke 41A, 41B mit den Sperraufnahmen 51A, 51B in der Schließstellung derart zu verriegeln, dass der formschlüssige Eingriff zwischen den Sperrabschnitten 410 an den Sperrstücken 41A, 41B und den Sperrabschnitten 511 an den Sperraufnahmen 51A, 51B gesperrt ist, wie dies aus Fig. 5C und 6C ersichtlich ist.

Der Verriegelungsmechanismus 52 weist, bei dem dargestellten Ausführungsbeispiel, ein Hebelelement 520 auf, das über ein Federelement 54 verschwenkbar an dem Körper 50 des zweiten Verschlussteils 5 gelagert ist. Das Federelement 54 bildet hierzu einen Lagerabschnitt 540 aus, der elastisch verformbar ist und an dem das Hebelelement 520 verschwenkbar angeordnet ist, wie dies insbesondere aus Fig. 6A ersichtlich ist.

Das Hebelelement 520 ist an einer ersten Gelenkachse 522 mit einem Verbindungshebel 521 gelenkig verbunden, wie dies aus Fig. 6C ersichtlich ist. Der Verbindungshebel 521 steht über eine zweite Gelenkachse 523 an einem der ersten Gelenkachse 522 abgewandten Ende mit einem Verrieglungselement 524 in gelenkiger Verbindung. Das Verriegelungselement 524 ist zwischen Führungselementen 55 linear verschiebbar an dem Körper 50 des zweiten Verschlussteils 5 geführt und kann durch Verstellen des Hebelelements 520 in Eingriff und außer Eingriff mit dem in Fig. 6C oben dargestellten Sperrstück 41A gebracht werden.

Der Verriegelungsmechanismus 52 dient dazu, die Sperrstücke 41A, 41B, gemeinsam in den zugeordneten Sperraufnahmen 51A, 51B zu verriegeln, sodass die Verbindung zwischen den Verschlussteilen 4, 5 mechanisch arretiert ist. In einer sperrenden Stellung greift das Verriegelungselement 524 hierbei mit einem daran geformten Hinterschnitt in den Sperrabschnitt 410 des zugeordneten Sperrstücks 41A ein, sodass über das Verriegelungselement 524 das Sperrstück 41A in formschlüssigen Eingriff mit dem Sperrabschnitt 511 der zugeordneten Sperraufnahme 51A gedrückt wird, wie dies aus Fig. 6C ersichtlich ist.

Die Anlage des Verriegelungselements 524 an dem Sperrstück 41A wird über das Hebelelement 520, das zusammen mit dem Verbindungshebel 521 einen Kniehebel verwirklicht, bewirkt und erfolgt unter elastischer Vorspannung dadurch, dass das Hebelelement 520 über das Federelement 54 und den Lagerabschnitt 540 elastisch gegenüber dem Körper 50 des zweiten Verschlussteils 5 abgestützt ist.

Weil das Hebelelement 520 gemeinsam mit dem Verbindungshebel 521 einen Kniehebel verwirklicht, ist die Arretierung des Sperrstücks 41A in der Sperraufnahme 51A selbsthemmend, weil eine Belastung an dem Verriegelungselement 524 nicht zu einem selbsttätigen Lösen des Verriegelungsmechanismus 52 führen kann, bedingt dadurch, dass die Gelenkachse 522 zum Lösen des Verriegelungsmechanismus 52 eine gedachte Linie (im Querschnitt gemäß Fig. 6C) zwischen der Gelenkachse 523 und dem Lagerabschnitt 540 zu überschreiten hat, was nicht ohne Kraftwirkung auf das Hebelelement 520 möglich ist.

Die Stellung des Hebelelements 520 kann in der gesperrten Stellung magnetisch arretiert sein, indem das Hebelelement 520 beispielsweise aus einem magnetischen Material, zum Beispiel einem ferromagnetischen Material, gefertigt ist und mit den Magnetelementen 43A, 53A zusammenwirkt und dadurch magnetisch in der Sperrstellung gemäß Fig. 6C gehalten ist.

Zusätzlich oder alternativ kann das Hebelelement 520 auch bei angesetzter Baugruppe 3 durch die Baugruppe 3 in der Sperrstellung arretiert sein, sodass bei an das Verschlussteil 5 angesetzter Baugruppe 3 das Hebelelement 520 nicht betätigbar ist.

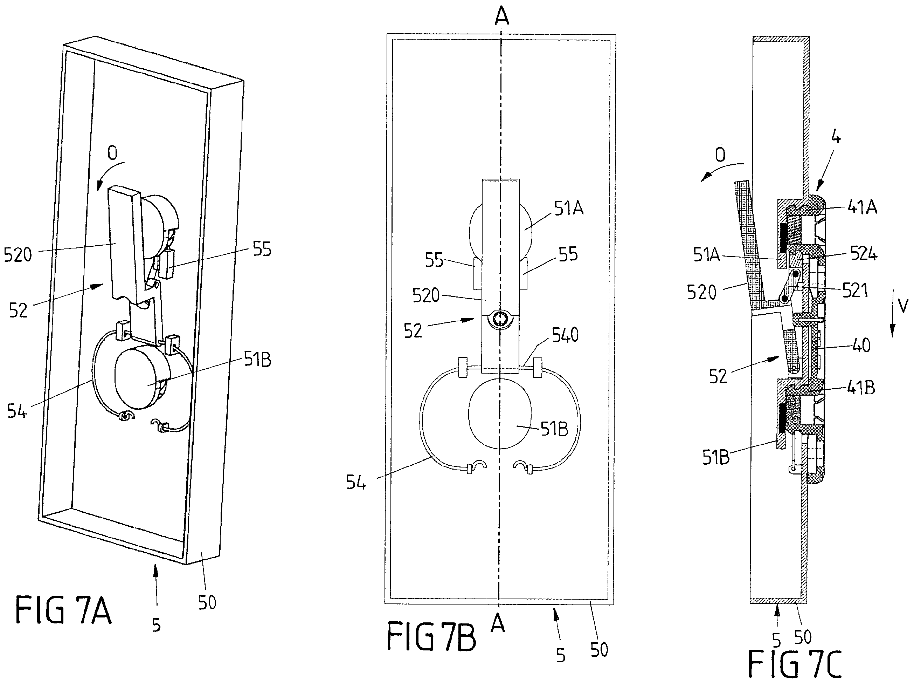

Zum Lösen des zweiten Verschlussteils 5 von dem ersten Verschlussteil 4 kann das Hebelelement 520 in eine Öffnungsrichtung O zu dem zweiten Verschlussteil 5 verschwenkt werden, wie dies aus Fig. 7A-7C, Fig. 8A-8C und Fig. 9A-9C ersichtlich ist. Durch Verschwenken des Hebelelements 520 wird das Verriegelungselement 524 in eine Verstellrichtung V quer zur Schließrichtung X von dem zugeordneten Sperrstück 41A entfernt, sodass die Sperrung des Sperrstücks 41A in der Sperraufnahme 51A aufgehoben wird.

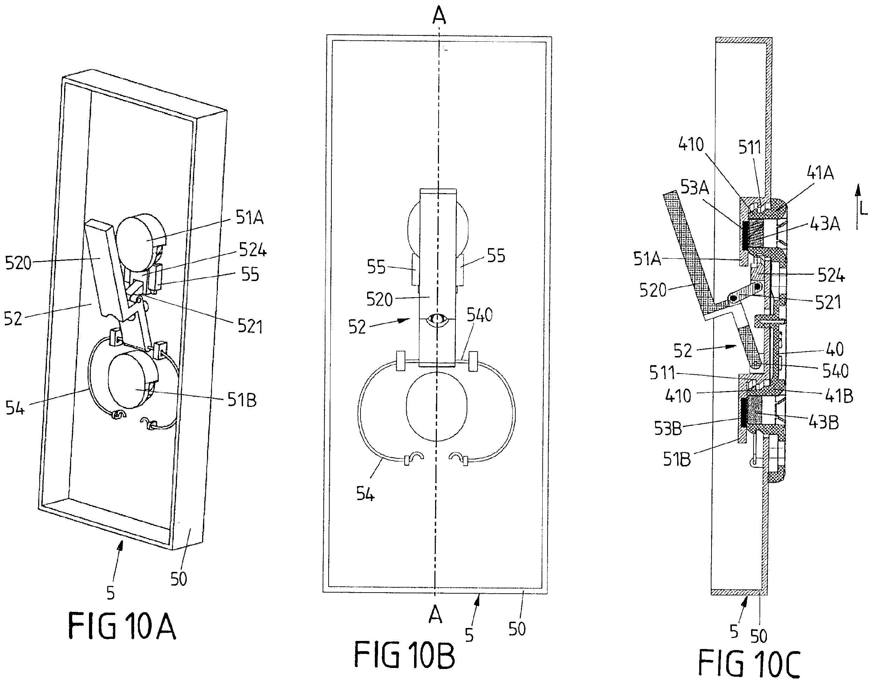

Ist die Sperrung aufgehoben, kann das zweite Verschlussteil 5, wie in Fig. 10A-10C dargestellt, in eine Löserichtung L, relativ zu dem ersten Verschlussteil 4 verstellt werden, sodass der Eingriff zwischen den Sperrabschnitten 410, 511 der Sperrstücke 41A, 41B und der Sperraufnahmen 51A, 51B aufgehoben wird. Die Löserichtung L ist hierbei der Verstellrichtung V entgegengesetzt und quer zur Schließrichtung X gerichtet.

Das Bewegen der Verschlussteile 4, 5 zueinander in die Löserichtung L wird hierbei durch einen Versatz der Magnetelemente 43A, 43B, 53A, 53B quer zur Schließrichtung X magnetisch unterstützt.

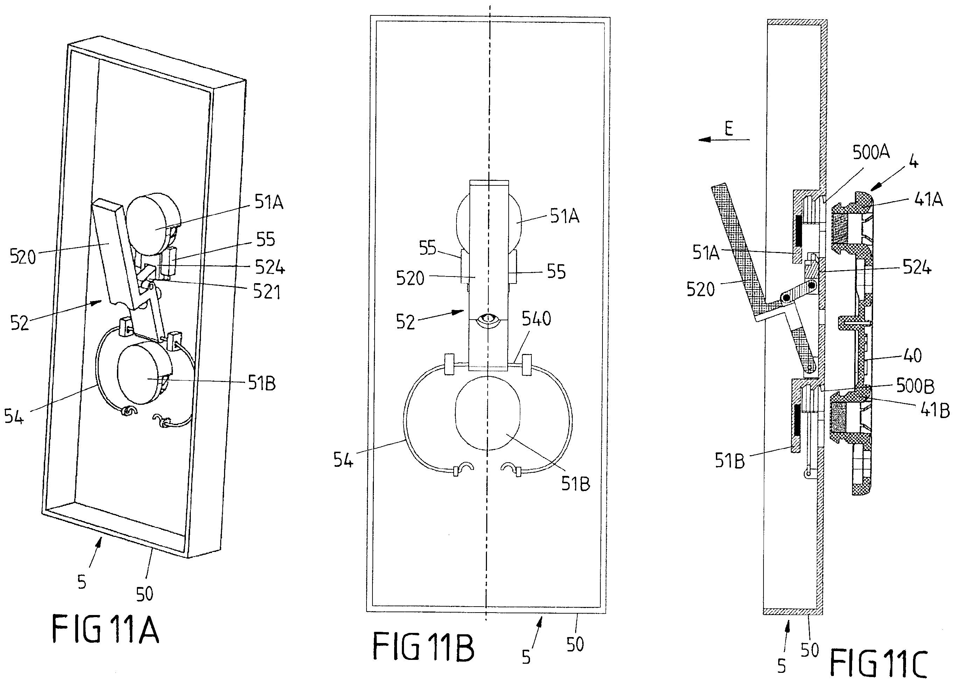

Ist der formschlüssige Eingriff zwischen den Sperrabschnitten 410, 511 aufgehoben, können die Verschlussteile 4, 5 entlang einer Trennrichtung E voneinander entnommen werden, wie dies in Fig. 11A-11C dargestellt ist.

Bei dem dargestellten Ausführungsbeispiel werden die Sperrstücke 41A, 41B, die über den Körper 40 starr miteinander verbunden sind, über ein einziges Verriegelungselement 524 gemeinsam in den zugeordneten Sperraufnahmen 51A, 51B gesperrt. Das Verriegelungselement 524 wirkt hierbei ausschließlich auf eines der Sperrstücke 41A, 41B ein und sperrt dieses in der zugeordneten Sperraufnahme 51A. Aufgrund der starren Verbindung der Sperrstücke 41A, 41B über den Körper 40 miteinander wird dadurch auch das andere Sperrstück 41B in der zugeordneten Sperraufnahme 51B arretiert.

Bei dem vorangehend beschriebenen Ausführungsbeispiel weist das Verriegelungselement 524 einen Hinterschnitt auf und steht somit formschlüssig mit dem Sperrabschnitt 410 des zugeordneten Sperrstücks 41A in Eingriff, wenn das Verschlussteil 4 in der Schließstellung gesperrt ist, wie dies aus Fig. 5A-5C und 6A-6C ersichtlich ist.

Denkbar ist hierbei auch, das Verriegelungselement 524 ohne Hinterschnitt auszubilden, sodass das Verriegelungselement 524 lediglich drückend quer zur Schließrichtung X auf das zugeordnete Sperrstück 41A einwirkt und dieses somit in Eingriff mit dem zugeordneten Sperrabschnitt 511 der Sperraufnahme 51A drückt und dadurch in der Sperraufnahme 51A sperrt.

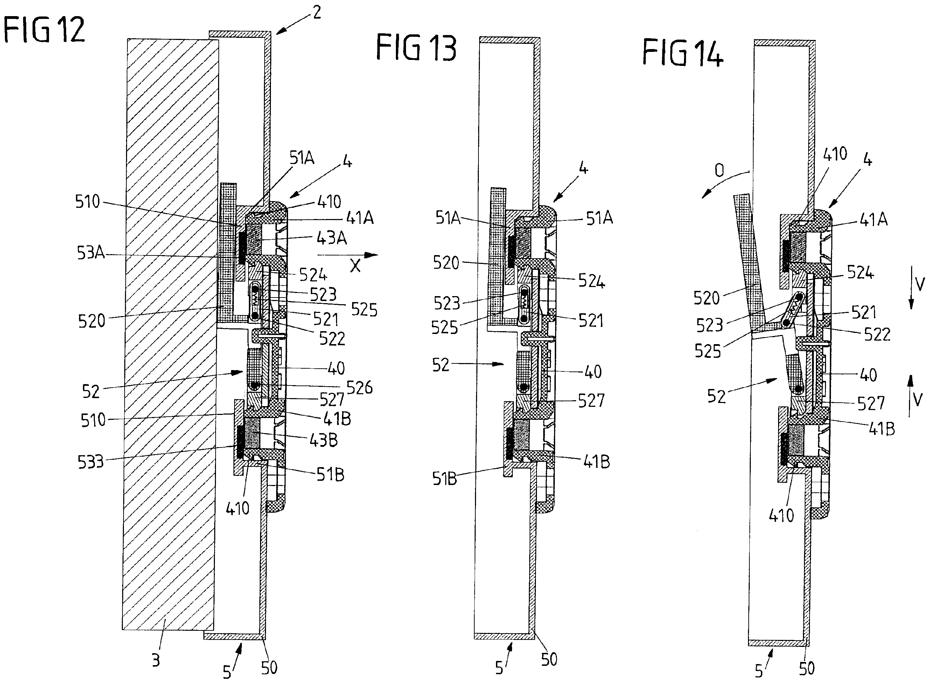

Bei einem anderen, in Fig. 12 bis 16 dargestellten Ausführungsbeispiel weisen die Sperraufnahmen 51A, 51B keine Sperrabschnitte auf, sondern verwirklichen im Wesentlichen zylindrische Führungen, in die die Sperrstücke 41A, 41B des Verschlussteils 4 entlang der Schließrichtung X einsetzbar sind. Die Sperrstücke 41A, 41B und die Sperraufnahmen 51A, 51B weisen hierbei jeweils, wie vorangehend beschrieben, Magnetelemente 43A, 43B, 53A, 53B auf, die das Ansetzen der Verschlussteile 4, 5 entlang der Schließrichtung X magnetisch unterstützen.

Bei dem in Fig. 12 bis 16 dargestellten Ausführungsbeispiel weist der Verriegelungsmechanismus 52 zwei Verriegelungselemente 524, 527 auf, die jeweils einem der Sperrstücke 41A, 41B zugeordnet und durch einen Betätigungsmechanismus relativ zu den Sperraufnahmen 51A, 51B linear verschiebbar sind. Die Verriegelungselemente 524, 527 weisen jeweils einen Hinterschnitt auf und stehen in der Schließstellung gemäß Fig. 12 und 13 formschlüssig mit den Sperrabschnitten 410 der Sperrstücke 41A, 41B des Verschlussteils 4 in Eingriff, sodass darüber eine formschlüssige Verbindung zwischen den Verschlussteilen 4, 5 geschaffen ist.

Der Verriegelungsmechanismus 52 weist ein Hebelelement 520 auf, das an einer Gelenkachse 526 mit dem Verriegelungselement 527 gelenkig verbunden ist. Über eine Gelenkachse 522 ist das Hebelelement 520 gelenkig mit einem Verbindungshebel 521 verbunden, der wiederum über eine Gelenkachse 523 gelenkig an das Verriegelungselement 524 gekoppelt ist. Die Gelenkachse 523 ist über ein Federelement 525 federelastisch gegenüber dem Verbindungshebel 521 abgestützt derart, dass die Gelenkachse 523 elastisch in einem Langloch des Verbindungshebels 521 verschiebbar ist und das Verriegelungselement 524 somit elastisch gegenüber dem Verbindungshebel 521 abgestützt ist.

In der gesperrten Stellung des Verriegelungsmechanismus 52 gemäß Fig. 12 stehen die Verriegelungselemente 524, 527 mit den Sperrstücken 41A, 41B in Eingriff, sodass eine Verbindung zwischen den Verschlussteile 4, 5 hergestellt ist. Fig. 12 zeigt die Verschlussvorrichtung 2 mit an dem Verschlussteil 5 angeordnetem Gegenstand 3. Fig. 13 zeigt die Verschlussvorrichtung 2 bei von dem Verschlussteil 5 gelöstem Gegenstand 3.

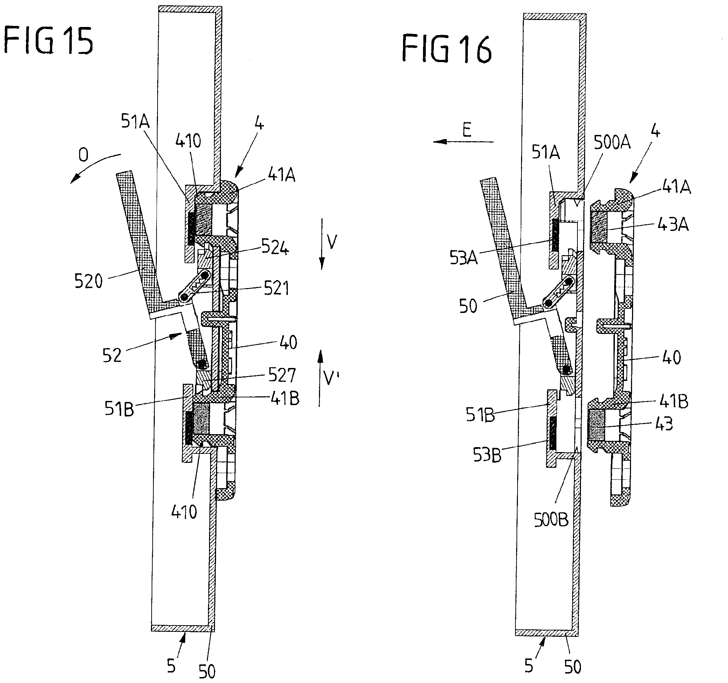

Zum Trennen der Verschlussteile 4, 5 voneinander kann das Hebelelement 520 in eine Öffnungsrichtung O verschwenkt werden, wodurch die Verriegelungselemente 524, 527 jeweils in eine zugeordnete Verstellrichtung V, V' außer Eingriff von den Sperrstücken 41A, 41B gezogen werden, wie dies im Übergang von Fig. 14 hin zu Fig. 15 ersichtlich ist. Um ein gleichzeitiges Verstellen der Verriegelungselemente 524, 527 zu gewährleisten, kann dabei eine geeignete Führung für das Hebelelement 520, den Verbindungshebel 521 und/oder die Verriegelungselemente 524, 527 an dem zweiten Verschlussteil 5 bereitgestellt sein, beispielsweise indem die Gelenkachse 522 zwischen dem Hebelelement 520 und dem Verbindungshebel 521 senkrecht zum Verschlussteil 5, also entlang der Schließrichtung X, zu dem Verschlussteil 5 geführt und somit quer zur Schließrichtung X in Position gehalten wird.

Sind die Verriegelungselemente 524, 527 außer Eingriff von den Sperrstücken 41A, 41B gebracht worden, können die Sperrstücke 41A, 41B aus den Sperraufnahmen 51A, 51B, entlang einer Trennrichtung E entnommen werden, wie dies aus Fig. 16 ersichtlich ist. Die Verschlussteile 4, 5 können somit voneinander getrennt werden.

Der der Erfindung zugrunde liegende Gedanke ist nicht auf die vorangehend geschilderten Ausführungsbeispiele beschränkt, sondern lässt sich auch in anderer Weise verwirklichen.

Bei den oben beschriebenen Ausführungsbeispielen ist ein Betätigungsmechanismus des Verriegelungsmechanismus durch einen Kniehebel verwirklicht.

Wünschenswert ist hierbei, eine Selbsthemmung in dem Betätigungsmechanismus bereitzustellen, die bewirkt, dass eine Belastung an einem oder an beiden Verriegelungselementen nicht zu einem selbsttätigen Entsperren des Verriegelungsmechanismus führen kann. Auch dies ist jedoch nicht unbedingt zwingend, sondern stattdessen kann beispielsweise auch eine Arretierung auf sonstige Weise an einer Komponente des Verriegelungsmechanismus geschaffen werden.

Eine Verschlussvorrichtung der beschriebenen Art ist zum Verbinden beliebiger Baugruppen miteinander einsetzbar. Vorteilhaft kann eine Verschlussvorrichtung der beschriebenen Art beispielsweise zum Verbinden von Gegenständen mit einem Fahrrad eingesetzt werden, wobei das erste Verschlussteil vorteilhaft fest und dauerhaft mit dem Fahrrad verbunden sein kann und über ein zweites Verschlussteil unterschiedliche Gegenstände, zum Beispiel eine Trinkflasche oder ein Fahrradschloss, mit dem Fahrrad verbunden werden können.

### Bezugszeichenliste

- 1: Erste Baugruppe (Fahrzeug)
- 10: Rahmen
- 100: Rahmenstange
- 2: Verschlussvorrichtung
- 3: Zweite Baugruppe (Behälter)
- 4: Verschlussteil
- 40: Körper
- 400A, 400B: Aufnahmeöffnung
- 41A, 41B: Sperrstück
- 410: Sperrabschnitt (Hinterschnitt)
- 411: Schaft
- 42: Zapfen
- 43A, 43B: Magnetelement
- 5: Verschlussteil
- 50: Körper
- 500A, 500B: Verschlussöffnung
- 501: Öffnung
- 51A, 51B: Sperraufnahme
- 510: Wandung
- 511: Sperrabschnitt (Hinterschnitt)
- 52: Verriegelungsmechanismus
- 520: Hebelelement
- 521: Verbindungshebel
- 522, 523: Gelenkachse
- 524: Verriegelungselement
- 525: Federelement
- 526: Gelenkachse
- 527: Verriegelungselement
- 53A, 53B: Magnetelement
- 54: Federelement
- 540: Lagerabschnitt
- 55: Führungselement
- E: Trennrichtung
- L: Löserichtung
- O: Öffnungsrichtung
- V, V': Verstellrichtung
- X: Schließrichtung

## Patentansprüche

1. Verschlussvorrichtung (2) zum Verbinden von zwei Baugruppen miteinander, mit
- einem an einer der Baugruppen anzuordnenden, ersten Verschlussteil (4), das zumindest zwei Sperrstücke (41A, 41B) mit jeweils einem Sperrabschnitt (410) und zumindest ein erstes Magnetelement (43A, 43B) aufweist,
- einem an der anderen der Baugruppen zu befestigenden, zweiten Verschlussteil (5), das zumindest zwei Sperraufnahmen (51A, 51B) und zumindest ein zweites Magnetelement (43A, 43B) aufweist, wobei das erste Verschlussteil (4) und das zweite Verschlussteil (5) entlang einer Schließrichtung (X) aneinander ansetzbar und in einer Schließstellung miteinander verbunden sind, indem die Sperrstücke (41A, 41B) des ersten Verschlussteils (4) in den Sperraufnahmen (51A, 51B) des zweiten Verschlussteils (5) aufgenommen sind, wobei das erste Magnetelement (43A, 43B) und das zweite Magnetelement (53A, 53B) ausgebildet sind, das Ansetzen des ersten Verschlussteils (4) und des zweiten Verschlussteils (5) aneinander magnetisch zu unterstützen, und
- einem an dem zweiten Verschlussteil (5) angeordneten Verriegelungsmechanismus (52), der zumindest zwei Verriegelungselemente (524, 527) und einen mit den Verriegelungselementen (524, 527) wirkverbundenen Betätigungsmechanismus aufweist, wobei die Verriegelungselemente (524, 527) in der Schließstellung mit den Sperrabschnitten (410) der Sperrstücke (41A, 41B) in Wirkverbindung bringbar sind, um eine formschlüssige oder reibschlüssige Verbindung zwischen dem ersten Verschlussteil (4) und dem zweiten Verschlussteil (5) herzustellen, wobei der Betätigungsmechanismus betätigbar ist, um die Verriegelungselemente (524, 527) relativ zu den Sperraufnahmen (51A, 51B) zu verstellen, sodass das erste Verschlussteil (4) und das zweite Verschlussteil (5) voneinander lösbar sind,
**dadurch gekennzeichnet,**
**dass** der Betätigungsmechanismus ein Hebelelement (520) aufweist, das zu dem zweiten Verschlussteil (5) verschwenkbar ist, um die Verriegelungselemente (524, 527) relativ zu den Sperraufnahmen (51A, 51B) zu verstellen, wobei der Betätigungsmechanismus einen Verbindungshebel (521) aufweist, der an einer ersten Gelenkachse (522) gelenkig mit dem Hebelelement (520) und an einer zweiten Gelenkachse (523) gelenkig mit einem der Verriegelungselemente (524, 527) verbunden ist.

2. Verschlussvorrichtung (2) nach Anspruch 1, **dadurch gekennzeichnet, dass** das Hebelelement (520) an einer dritten Gelenkachse (526) gelenkig mit einem anderen der Verriegelungselemente (524, 527) verbunden ist.

3. Fahrrad (1), mit einer Verschlussvorrichtung (2) nach Anspruch 1 oder 2 zum Befestigen einer Baugruppe (3) an einem Rahmen (10) des Fahrrads (1).

## Claims

1. A closure device (2) for connecting two assemblies to one another, comprising
- a first closure part (4) which is to be arranged on one of the assemblies and which has at least two locking pieces (41A, 41B) with in each case a locking section (410) and at least one first magnetic element (43A, 43B),
- a second closure part (5) which is to be fastened to the other of the assemblies and which has at least two locking receptacles (51A, 51B) and at least one second magnetic element (43A, 43B), wherein the first closure part (4) and the second closure part (5) are attachable to one another in a closing direction (X) and are connected to one another in a closed position, by the locking pieces (41A, 41B) of the first closure part (4) being received in the locking receptacles (51A, 51B) of the second closure part (5, wherein the first magnetic element (43A, 43B) and the second magnetic element (53A, 53B) are configured to assist magnetically the attachment of the first closure part (4) and the second closure part (5) to one another, and
- an arresting mechanism (52) which is arranged on the second closure part (5) and which has at least two arresting elements (524, 527) and an actuating mechanism which is operatively connected to the arresting elements (524, 527), wherein the arresting elements (524, 527) are able to be brought into operative connection with the locking sections (410) of the locking pieces (41A, 41B) in the closed position, in order to produce a positively locked connection or a frictional connection between the first closure part (4) and the second closure part (5), wherein the actuating mechanism is actuatable in order to adjust the arresting elements (524, 527) relative to the locking receptacles (51A, 51B) so that the first closure part (4) and the second closure part (5) are releasable from one another,
**characterized in that**
the actuating mechanism has a lever element (520) which is pivotable relative to the second closure part (5) in order to adjust the arresting elements (524, 527) relative to the locking receptacles (51A, 51B), wherein the actuating mechanism has a connecting lever (521) which is connected at a first joint axis (522) in an articulated manner to the lever element (520) and at a second joint axis (523) in an articulated manner to one of the arresting elements (524, 527).

2. The closure device (2) as claimed in claim 1, **characterized in that** the lever element (520) is connected at a third joint axis (526) in an articulated manner to another of the arresting elements (524, 527).

3. A bicycle (1) comprising a closure device (2) as claimed in claim 1 or 2, for fastening an assembly (3) to a frame (10) of the bicycle (1).

## Revendications

1. Dispositif de fermeture (2) pour relier deux modules l'un à l'autre, avec
- une première partie de fermeture (4) à disposer sur l'un des modules, qui présente au moins deux pièces de blocage (41A, 41B) avec respectivement une section de blocage (410) et au moins un premier élément magnétique (43A, 43B),
- une deuxième partie de fermeture (5) à fixer sur l'autre des modules, qui présente au moins deux logements de blocage (51A, 51B) et au moins un deuxième élément magnétique (43A, 43B), dans lequel la première partie de fermeture (4) et la deuxième partie de fermeture (5) peuvent être placées l'une contre l'autre le long d'une direction de fermeture (X) et sont reliées l'une à l'autre dans une position de fermeture en ce que les pièces de blocage (41A, 41B) de la première partie de fermeture (4) sont logées dans les logements de blocage (51A, 51B) de la deuxième partie de fermeture (5), dans lequel le premier élément magnétique (43A, 43B) et le deuxième élément magnétique (53A, 53B) sont réalisés pour soutenir le placement de la première partie de fermeture (4) et de la deuxième partie de fermeture (5) l'une contre l'autre de manière magnétique, et
- un mécanisme de verrouillage (52) disposé sur la deuxième partie de fermeture (5), qui présente au moins deux éléments de verrouillage (524, 527) et un mécanisme d'actionnement relié activement aux éléments de verrouillage (524, 527), dans lequel les éléments de verrouillage (524, 527) peuvent être amenés en liaison active avec les sections de blocage (410) des pièces de blocage (41A, 41B) dans la position de fermeture pour établir une liaison par complémentarité de forme ou par friction entre la première partie de fermeture (4) et la deuxième partie de fermeture (5), dans lequel le mécanisme d'actionnement peut être actionné pour ajuster les éléments de verrouillage (524, 527) par rapport aux logements de blocage (51A, 51B) si bien que la première partie de fermeture (4) et la deuxième partie de fermeture (5) peuvent être détachées l'une de l'autre,
**caractérisé en ce que**
le mécanisme d'actionnement présente un élément de levier (520) qui peut être pivoté par rapport à la deuxième partie de fermeture (5) pour ajuster les éléments de verrouillage (524, 527) par rapport aux logements de blocage (51A, 51B), dans lequel le mécanisme d'actionnement présente un levier de liaison (521), qui est relié de manière articulée à l'élément de levier (520) sur un premier axe d'articulation (522) et de manière articulée à l'un des éléments de verrouillage (524, 527) sur un deuxième axe d'articulation (523).

2. Dispositif de fermeture (2) selon la revendication 1, **caractérisé en ce que** l'élément de levier (520) est relié de manière articulée sur un troisième axe d'articulation (526) à un autre des éléments de verrouillage (524, 527).

3. Bicyclette (1) avec un dispositif de fermeture (2) selon la revendication 1 ou 2 pour fixer un module (3) sur un cadre (10) de la bicyclette (1).
